Europäisches Patentamt

European Patent Office

Office européen des brevets

(19)

(11) **EP 1 473 896 A1**

(12) **DEMANDE DE BREVET EUROPEEN**

(43) Date de publication:
**03.11.2004 Bulletin 2004/45**

(51) Int Cl.⁷: $H04L\ 27/26$, $H04L\ 25/03$, $H04L\ 5/14$

(21) Numéro de dépôt: **04392011.5**

(22) Date de dépôt: **30.03.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL LT LV MK**

(30) Priorité: **01.04.2003 FR 0304047**

(71) Demandeur: **STMicroelectronics S.A.**
**92120 Montrouge (FR)**

(72) Inventeurs:
• **Del Toso, Christophe**
**38640 Claix (FR)**
• **Trang, Chan-Virak**
**38330 St-Ismier (FR)**

(74) Mandataire: **Schuffenecker, Thierry**
**97, chemin de Cassiopée,**
**Domaine de l'étoile**
**06610 La Gaude (FR)**

(54) **Procédé de configuration d'un modem xDSL et modem xDSL disposant d'un tel procédé**

(57) Procédé de configuration d'un modem de type xDSL symétrique, comportant les étapes suivantes :

- détection d'un critère prédéterminé correspondant à un mode de fonctionnement asymétrique,
- en réponse à la dite détection, éteindre un nombre de porteuses de manière à établir un mode de fonctionnement asymétrique.

Plus spécifiquement, le modem de type VDSL. fonctionnant avec un nombre de porteuses jusqu'à 4096 et pouvant être reconfiguré dans un mode ADSL avec un nombre de porteuses réduit à 256 porteuses. Dans un cas, ledit critère est la détection de signaux définis dans la recommandation G.994.1 de l'Union Internationale des Télécommunications (UIT). Alternativement, on pourra commander la commutation de mode à partir de la mesure de la longueur de la ligne.

Fig. 4

## Description

## Domaine technique de l'invention

La présente invention concerne le domaine des télécommunications et plus spécifiquement un procédé de configuration d'un modem de type VDSL permettant plusieurs types de fonctionnement et un tel modem.

## Etat de la technique

Les nouvelles applications de télécommunication exigent un accès rapide au réseau Internet et des débits de transmission élevés.

Les techniques de type *« Digital Subscriber Line »* (DSL) se développent et notamment la première d'entre elles communément connue sous le vocable de ADSL *(Asynchronous Digital Subscriber Line)* qui se généralise sur le réseau. Cette technique permet des débits de l'ordre de 5 Mbits/s jusqu'à des distances de l'ordre de 5Km.

D'autres techniques plus prometteuses assureront des débit plus élevés. C'est le cas des techniques VDSL. *(Very high speed Digital Subscriber Line),* encore en cours de définition par les autorités de normalisation, et qui permettront des communications aussi bien asymétriques que symétriques pouvant atteindre des débits de 50 Mbits/s pour des distances qui sont toutefois bien inférieures, de l'ordre de 1 à 2 Km.

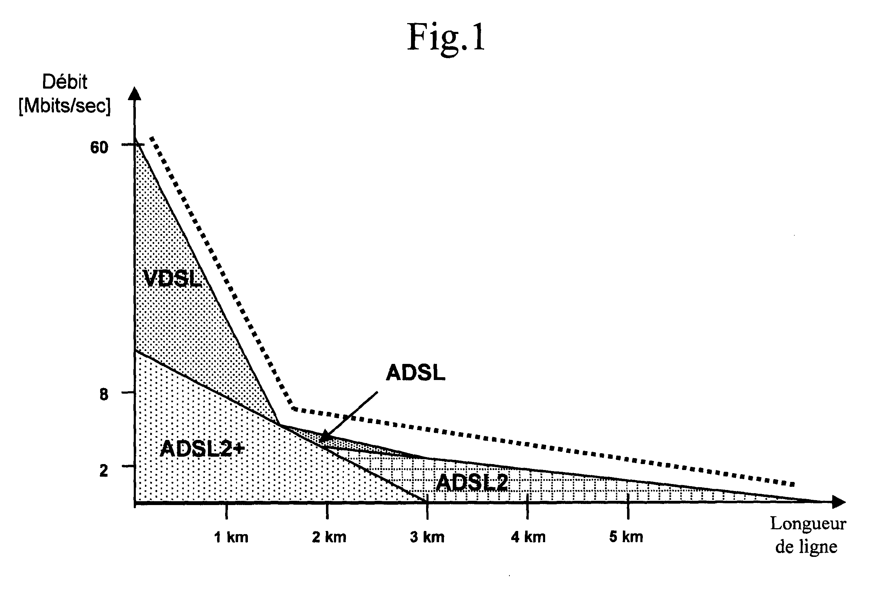

La figure 1 illustre d'une manière schématique la situation des différentes techniques de type xDSL - dont certaines sont encore aujourd'hui en cours de définition par les autorités de normalisation notamment à l'UIT (Union Internationale de Télécommunications), l'ANSI et l'IEEE.

Comme on le voit sur la figure, si les techniques de type ADSL (et ses techniques dérivées ADSL2 et ADSL2+) permettent de généraliser un accès rapide jusqu'à une distance d'environ 5 Km, les débits les plus importants resteront réservés à la seule technique VDSL, laquelle ne permettra toutefois ces débits que jusqu'à une distance limitée de 1.5 Km.

Pour cette raison, il est assez commun d'opposer l'ADSL au VDSL en considérant le premier comme le moyen pour réaliser un accès grand public à l'Internet haut débit et en réservant le second à des marchés de niche et notamment pour des applications de transport de vidéo haut-débit destinées à des clients résidentiels ou pour des utilisations professionnelles, telles que la vidéo conférence, forte consommatrice de débit symétrique.

Pour autant, cette opposition n'est qu'un artifice et l'on peut légitimement penser qu'à terme, les consommateurs (le grand public comme les professionnels), s'orienteront vers les techniques les plus performantes dès lors que celles-ci deviendront accessibles commercialement.

En raison du fort développement que connaît aujourd'hui l'ADSL dans les réseaux, il est clair que l'on arrivera alors à une situation de coexistence qui perdurera pendant un certain temps. Les consommateurs qui auront choisi d'investir dans l' ADSL n'accepteront pas de changer immédiatement leurs coûteux modems ADSL pour de nouveaux et plus coûteux encore modems VDSL. De leur côté, les opérateurs de télécommunication ne mettront vraisemblablement en place que progressivement un plan d'évolution du parc des modems situés dans les sous-répartiteurs de leur réseau de communication.

Les deux techniques d'accès symétrique et asymétrique mises en oeuvre par l'ADSL et le VDSL seront donc appelées à coexister pour longtemps et cette coexistence ne sera pas sans susciter certains problèmes tant auprès des consommateurs que des opérateurs de télécommunication eux-mêmes.

En effet, pour les uns, il leur faudra se préoccuper du type d'accès ADSL ou VDSL que sera susceptible de leur offrir l'opérateur de télécommunication dans un lieu géographique donné, et il se peut que les deux types d'accès ne leur soient pas systématiquement offerts. Pour les autres, il leur faudra gérer le souci - bien légitime - des consommateurs de ne pas vouloir renouveler le modem à peine installé.

Par conséquent, du fait de la coexistence des techniques ADSL et VDSL qui va perdurer, il serait souhaitable de faciliter le choix des consommateurs - aussi bien les consommateurs professionnels que le grand public - en évitant aux uns et aux autres de se préoccuper du type d'accès auxquels ils peuvent réellement souscrire. Pour les opérateurs, il serait tout également souhaitable que ceux-ci puissent gérer avec sérénité le parc de matériels existants dans les différents sous-répartiteurs composant leur réseau (que l'on désigne couramment sous l'appellation anglo-saxonne de *Optical Network Unit)* de manière à permettre la migration progressive des matériels.

Par ailleurs, indépendamment de la coexistence des modems de type ADSL et VDSL qui sont appelés à coexister comme cela a été évoqué précédemment, il serait souhaitable de pouvoir bénéficier aussi bien des avantages du VDSL et de l'ADSL en offrant à l'utilisateur la possibilité de garder le contrôle du mode de communication avec le réseau..

De multiples fonctions et nouvelles applications pourront alors en découler.

## Résumé de l'invention

La présente invention a pour but de proposer un procédé de configuration d'un modem de type xDSL permettant le fonctionnement dans un mode asymétrique.

Un autre but de l'invention consiste à réaliser une architecture de modem DSL bi-mode autorisant des accès haut-débit aussi bien dans un mode ADSL que VDSL.

Un troisième but de l'invention consiste à réaliser un modem de type VDSL permettant une interopérabilité descendante avec les modems de type ADSL et dérivés, à savoir notamment ADSL2 et ADSL2+, ce qui permettra d'installer en toute sérénité un tel modem sans se préoccuper du type de modem avec lequel il sera destiné à communiquer.

L'invention réalise ces buts au moyen d'un procédé de configuration automatique d'un modem de type xDSL. fonctionnant en mode VDSL., comportant les étapes suivantes :

- détection d'un critère prédéterminé correspondant à un mode de fonctionnement asymétrique, notamment de type ADSL ;
- en réponse à la dite détection, éteindre un nombre de porteuses de manière à établir un mode de fonctionnement ADSL.

De ce fait, le modem xDSL peut commuter d'un mode de fonctionnement VDSL en un mode de fonctionnement ADSL ou l'un de ses dérivés, ADSL2, ADSL2+ etc....

Typiquement, le modem est de VDSL. fonctionnant avec un nombre de porteuses jusqu'à 4096 et pouvant être reconfiguré dans un mode ADSL. avec un nombre de porteuses réduit à 256 porteuses pour un fonctionnement en mode ADSL ou ADSL2 ou 512 porteuses pour un fonctionnement en mode ADSL2+.

De préférence, l'autoconfiguration est réalisée suite à la mise en oeuvre de la procédure définie par la recommandation G.994.1 de l'UIT.

Alternativement, on pourra déterminer le mode de configuration optimale par la détection d'un critère basé sur la mesure de la longueur de la ligne.

On réalise ainsi un modem DSL toute technologie - symétrique et asymétrique - et le consommateur pourra l'acquérir et l'installer sans se préoccuper du type d'accès - ADSL ou VDSL - qui lui sera offert par l'opérateur de télécommunication. Si un accès de type VDSL est immédiatement disponible, le consommateur en bénéficiera immédiatement. S'il ne dispose que d'un accès ADSL quand bien même il serait situé à une distance inférieure à 1.5 km, il pourra néanmoins bénéficier du haut débit offert par un accès ADSL. Et dès lors que l'opérateur de télécommunication aura fait migrer la ligne de l'abonné vers la technique VDSL, le consommateur pourra alors immédiatement en bénéficier sans modification sur son matériel.

La pérennité de l'investissement des consommateurs, qu'ils s'agissent des professionnels ou du grand public, se trouve ainsi assurée.

Du côté de l'opérateur, il lui sera plus facile de gérer le parc de modems existants dans ses différents sous-répartiteurs composant son réseau, sans avoir à se préoccuper du type - ADSL ou VDSL - du type de modem existant chez le consommateur.

Le circuit selon l'invention offre en outre une nouvelle fonction de commande dynamique du mode de communication d'un modem DSL bi-mode ADSL (et techniques dérivés) et VDSL.

De cette manière, le consommateur équipé de son modem DSL bi-mode, pourra choisir le mode de fonctionnement ADSL ou VDSL en fonction du type de services et des débits souhaités. Par exemple, pour un simple accès à Internet, il pourra sélectionner le mode ADSL. En revanche, pour voir ou télécharger de la vidéo à la demande, jouer en réseau ou avoir une session de vidéoconférence haute qualité, il pourra sélectionner le mode VDSL.

Le modem selon l'invention apporte une grande flexibilité de fonctionnement pour l'accès au réseau haut débit et permet, de plus, de nouvelles possibilités de services pour les opérateurs de télécommunication.

De préférence, le modem VDSL comporte un moyen de désactivation du suffixe cyclique CS dans le chemin de transmission ainsi qu'un filtrage numérique de mise en forme spectrale *(Power Spectral Density Shaping Filter, PSF)* pour la conformité à un masque de type ADSL, associé à un filtrage numérique de suppression d'écho *(Echo Suppression Filter, ESF)* et d'égalisation temporelle (TEQ) dans le chemin de réception.

Les deux filtres numériques PSF et ESF permettent de fonctionner soit en mode VDSL soit en mode ADSL et ce avec la même interface de ligne. On peut ainsi traiter convenablement les signaux dans un mode ADSL en respectant les contraintes propres à ce mode. Avec la même électronique de base qui pourra d'ailleurs être très aisément intégrée, on réalise ainsi, d'une part, l'interopérabilité d'une architecture de modem VDSL et, d'autre part, une possibilité de commander de manière manuelle ou dynamique le mode de communication - ADSL ou VDSL - du modem.

On arrive ainsi, au sein d'une même électronique assurant l'interface de ligne, à assurer une compatibilité au niveau des contraintes spectrales des puissances émises.

De ce fait on peut concevoir un modem de type VDSL qui permette un fonctionnement dans un mode d'interopérabilité avec le standard ADSL, réalisant par conséquent une interopérabilité dans les deux modes de fonctionnement.

L'invention fournit également un nouveau type de modem disposant d'une fonctionnalité d'autoconfiguration automatique.

**Description des dessins**

D'autres caractéristiques, buts et avantages de l'invention apparaîtront à la lecture de la description et des dessins ci-après, donnés uniquement à titre d'exemples non limitatifs. Sur les dessins annexés :

La figure 1 illustre la situation de différentes technologies xDSL. et leurs performances en fonction de la longueur de la ligne et du débit théorique.

La figure 2 illustre les positions respectives d'un modem de type LT (c'est-à-dire le modem placé du côté du serveur ou du sous-répartiteur) et celle d'un modem de type NT (c'est-à-dire le modem placé chez l'abonné).

La figure 3 illustre un diagramme fonctionnel des constituants d'un modem VDSL interopérable en mode ADSL.

La figure 4 illustre un premier mode de configuration automatique d'un modem interopérable suivant l'invention.

La figure 5 illustre un second mode de configuration automatique d'un modem interopérable suivant l'invention.

La figure 6 détaille l'interface de ligne d'un modem interopérable conformément à la présente invention.

La figure 7 illustre un mode de réalisation préférée de l'architecture de base d'un modem inter opérable suivant l'invention.

Les figures 8, 9a et 9b illustrent l'effet du suffixe cyclique (CS) utilisé dans le mode VDSL.

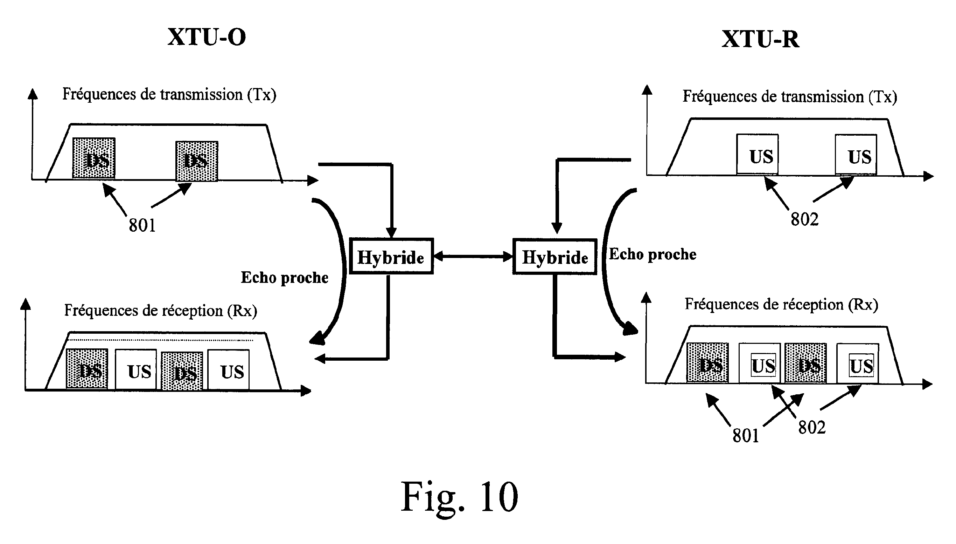

La figure 10 illustre l'effet de l'écho dans la chaîne de réception d'un modem de type VDSL.

Les figures 11 et 12 illustrent l'effet du filtrage PSF pour la conformité au gabarit du masque de PSD propre à l'ADSL.

### Description d'un mode de réalisation préféré

On désignera le modem situé dans un sous-répartiteur, chez l'opérateur de télécommunication, sous l'appellation xTU-O (de l'expression *xDSL Transceiver unit Office*) , situé au côté LT *(Line Termination).* Par opposition, le modem qui est situé chez l'abonné est désigné xTU-R (de l'expression *xDSL Transceiver Unit Remote* ), et est situé du côté NT (*Network Termination*) .

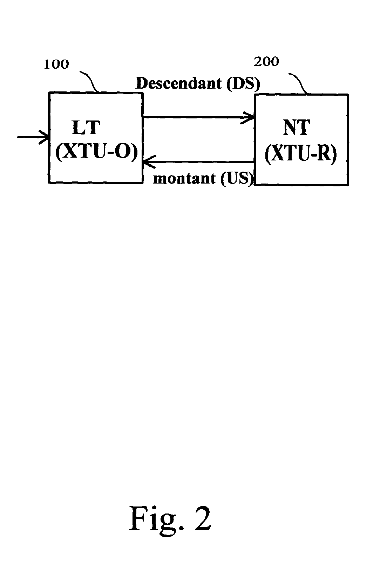

La figure 2 illustre les positions respectives d'un modem 100 de type LT et d'un modem 200 de type NT. Le caractère asymétrique du flux dans le mode ADSL implique que le flux du modem LT vers le modem NT — flux descendant ou DS (*downstream*) est plus important que le flux montant (flux US ou *Upstream* dans la littérature anglo-saxonne).

Les modems ADSL connus comportent des filtres aussi bien en émission qu'en réception destinés à séparer les différentes bandes de fréquence allouées aux flux montant (ou *upstream)* et descendant (*downstream*). On rappelle qu'en mode ADSL, les porteuses sont espacées régulièrement de 4.3125 kHz. Du fait des caractéristiques de la ligne, le signal modulé et transmis sur la paire de cuivre torsadée subit un étalement de sa réponse impulsionnelle (RI) ; ce qui a pour conséquence de générer de l'interférence entre-symbole (IES ou *Inter Symbol Interference* ISI dans la littérature anglo-saxonne) qui vient perturber la réception des symboles.

Il est alors nécessaire de pouvoir éliminer cette interférence entre-symbole IES.

Dans la technique ADSL connue, on élimine classiquement l'IES au moyen, d'une part, d'un préfixe cyclique CP placé au début de chaque symbole et, d'autre part, un égaliseur temporel appelé TEQ.

Le préfixe cyclique CP sert à absorber l'étalement maximum de la réponse impulsionnelle du canal ; réponse elle même égale au produit de convolution de la réponse impulsionnelle de l'émetteur placé d'un côté de la ligne (noté $h_{tx}(t)$), de la réponse impulsionnelle de la ligne elle-même (notée $h_{ligne}(t)$) et de la réponse impulsionnelle du récepteur placé de l'autre côté de la ligne (notée $h_{rx}(t)$). Dans le système de notation de l'homme du métier, la réponse du canal s'exprime par

$$h_{canal}(t) = h_{tx}(t) * h_{ligne}(t) * h_{rx}t.$$

En pratique, la longueur du préfixe cyclique CP est fixée à une valeur $t_{max}$ telle que

$$h_{canal}(t_{max}) \cong 0. \qquad \text{(eq. 1)}$$

Cependant, en mode ADSL, les longueurs de lignes considérées étant plus élevées (jusqu'à 5 km et plus), la réponse impulsionnelle $h_{canal}(t)$ est quasi infinie ; ce qui reviendrait à prendre d'après (eq. 1) une valeur de CP elle-aussi infinie ou tout du moins égale à la durée des symboles. Le débit serait alors pratiquement nul.

Une façon de pallier ce problème consiste à utiliser un égaliseur temporel (TEQ) dont le but est de raccourcir la réponse impulsionnelle $h_{canal}(t)$ de façon à la contenir dans un intervalle CP de longueur acceptable. Dans le mode ADSL classique, la valeur de CP est fixée à 40 échantillons à 2.208 MHz.

L'égalisation temporelle TEQ est connue de l'homme du métier et consiste classiquement à utiliser un filtre numérique réel dont les coefficients sont calculés pendant la phase d'initialisation du modem.

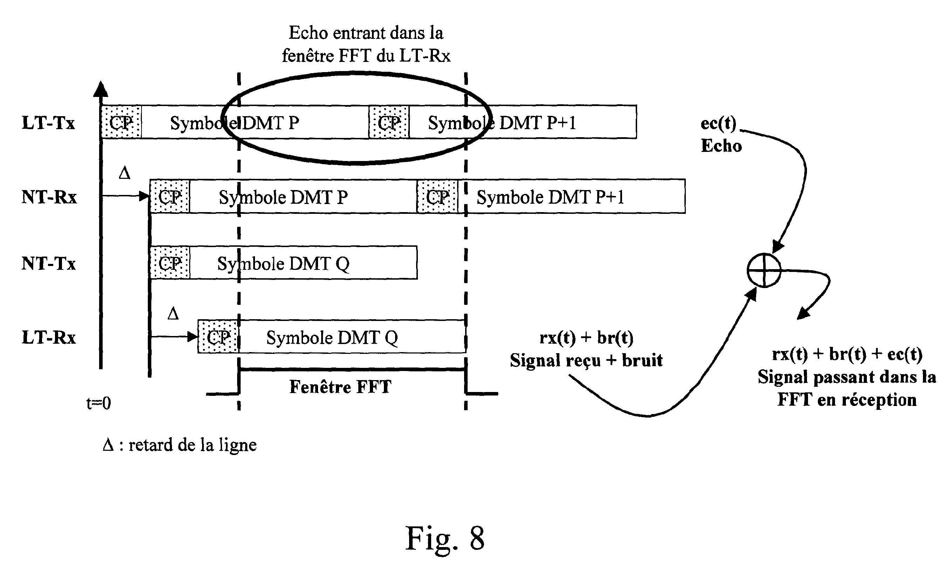

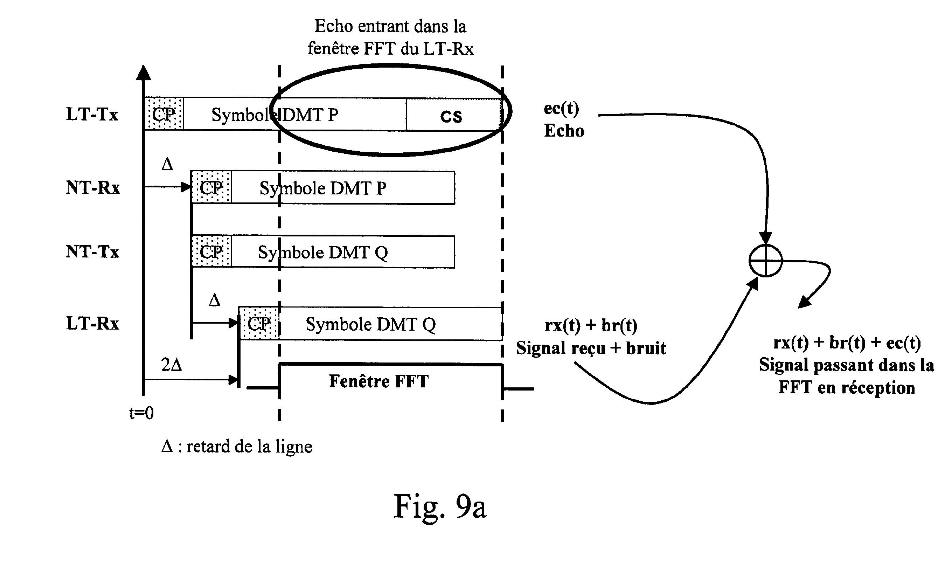

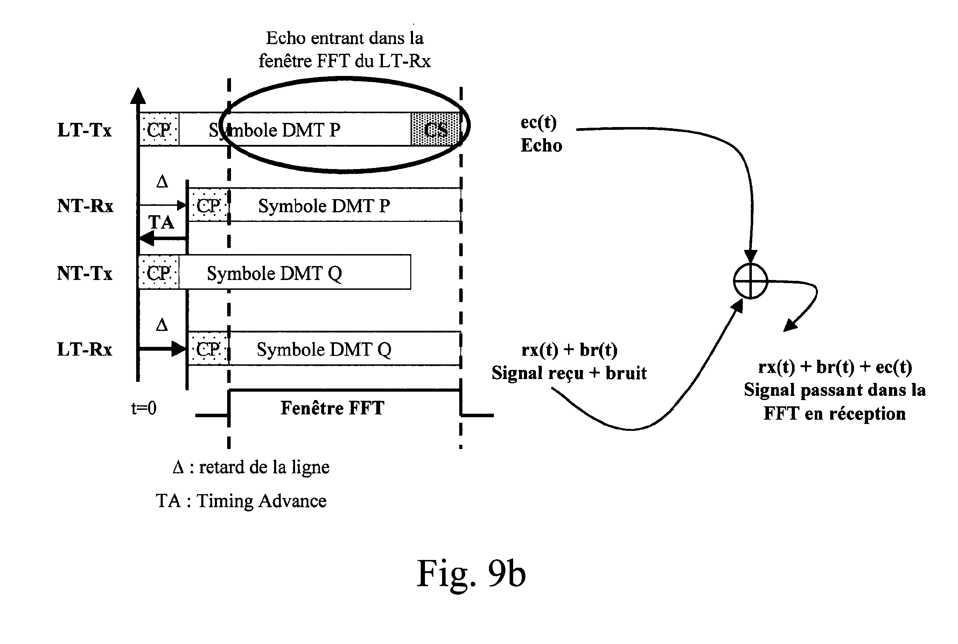

Dans la technique VDSL classique, les longueurs de lignes étant plus courtes (< 1.5 Km), l'élimination de l'IES peut être réalisée au seul moyen du préfixe cyclique (CP) dont on combine l'action avec celle d'un suffixe cyclique CS qui permet de préserver l'orthogonalité entre le signal reçu rx(t) et le signal provenant de l'écho ec(t) comme indiqué dans les figures 8 et 9. Avec ce principe, on peut donc séparer les bandes de fréquence allouées dans le sens montant (« upstream ») ou descendant (« Downstream ») sans avoir besoin de filtres analogiques supplémentaires dans l'interface de ligne.

Dans la technique ADSL, on ne dispose pas d'un suffixe cyclique CS et la séparation des bandes « Upstream » et « Downstream » se fait au moyen de filtres analogiques coûteux insérés au niveau de l'interface de ligne.

Le circuit selon l'invention permet de s'affranchir de la contrainte du filtrage analogique et permet à une même interface de ligne de fonctionner aussi bien dans un mode VDSL que ADSL.

A cet effet, on incorpore un traitement numérique spécifique dans la chaîne de traitement numérique du signal, ce traitement numérique étant basé, dans le chemin de transmission, sur un filtre PSF *(PSD Shaping Filter)* de mise en forme de la densité spectrale de puissance et, dans le chemin de réception, un filtre numérique ESF de suppression d'écho *(Echo Suppression Filter)* et un égaliseur temporel TEQ.

De préférence on réalise les deux filtres au moyen d'un filtre passe-bande, composé d'un filtre passe-bas elliptique à réponse impulsionnelle infinie du troisième ordre et d'un filtre passe-haut à réponse impulsionnelle infinie du 6$^{ème}$ ordre.

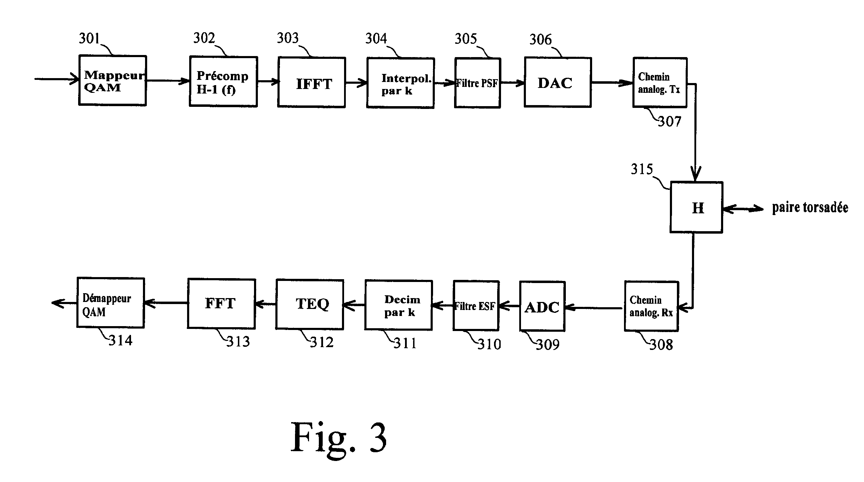

La figure 3 illustre un schéma de principe d'un modem selon la présente invention, fonctionnant aussi bien en mode VDSL qu'en un mode ADSL.

Le circuit de transmission se compose d'un mappeur QAM 301 réalisant la correspondance entre un symbole M-aire à transmettre et un point dans une constellation QAM *(Quadrature Amplitude Modulation)* à 2$^M$ états, suivi d'un filtre de précompensation H$^{-1}$ (f), multipliant échantillon entrant par la fonction inverse du filtre PSF de façon à corriger la distorsion introduite par ce dernier, un modulateur IFFT *(Inverse Fast Fourrier Transform)* 303 permettant de réaliser la modulation DMT (Discrete Multi-Tone) pour un nombre de points complexes N variable, selon le mode ADSL ou VDSL choisi, suivi d'un interpolateur optionnel 304 (réalisant une interpolation par k) destiné à sur-échantillonner le signal extrait du modulateur 303. En mode VDSL, la transformée de Fourrier Inverse peut comprendre jusqu'à 4096 points complexes. En revanche, en mode ADSL, le nombre N est fixé à une valeur de 256 (pour le flux descendant) et, par conséquent, l'interpolateur 304 permet de réaliser l'interface entre la sortie du bloc IFFT 303 et le bloc suivant, qui est un filtre PSF 305 permettant de réaliser la mise en forme du signal pour la conformité au masque de PSD *(Power Spectral Density)* exigé dans le mode ADSL. Le signal est ensuite converti sous forme analogique par un convertisseur numérique-analogique DAC 306 *(Digital to Analog Converter)*, puis transmis à un hybride 315 via un chemin analogique Tx 307 commun au mode ADSL et VDSL.

Le circuit de réception se compose, d'une manière duale, d'un chemin analogique 308, puis d'un convertisseur analogique-numérique ADC 309, puis d'un filtre numérique 310 de suppression d'écho (ESF). Un bloc 311 de décimation par k permet de régler le rapport d'échantillonnage entre la fréquence de conversion de l'ADC 309 et le rythme des échantillons à l'entrée de la transformée de Fourrier qui sera mise en oeuvre par un bloc FFT 313 réalisant la démodulation du signal après traitement par un égaliseur temporel TEQ *(Time-domainEqualizer)*. L'extraction des symboles est ensuite réalisée par un démappeur 314.

On constate de façon surprenante que l'on peut se passer, grâce à l'intervention des filtres PSF 305 et ESF 310 des circuits de filtrage analogiques que l'on trouve traditionnellement dans un modem de type ADSL. Les principaux réglages deviennent ainsi directement accessibles par voie logicielle et il est dès lors rendu possible de commander très simplement la configuration du modem dans un mode ADSL ou VDSL en fonction d'un critère déterminé.

On décrit à présent de manière détaillée l'architecture générale d'un modem bi-mode conformément à la présente invention. D'une manière générale, dans le mode de réalisation préféré, le modem se présente sous la forme d'un circuit intégré de type ASIC intégrant les deux fonctions VDSL et ADSL. Seule l'interface de ligne, commune à la fonction ADSL et VDSL, est réalisée à l'extérieur du circuit intégré. Il est à noter que dans la suite des développements la référence à l'appellation VDSL s'entend à la technique dite VDSL - DMT qui correspond à l'application la plus directe du concept de l'invention. En effet, le VDSL-DMT partage, comme cela est connu de l'homme du métier, la même technique de modulation dite DMT *(Discrete Multi-Tone)* que celle du standard ADSL. Dans le standard ADSL, une bande de fréquence de 1.104 MHz est divisée en 256 porteuses régulièrement espacées et distantes de 4.3125 KHz. Dans l'approche VDSL-DMT, le nombre de porteuses peut être fixé à 4096, 2048, 1024, 512 ou 256 et la bande de fréquence normalisée s'élève jusqu'à 12 MHz.

## 1 Architecture de modem ADSL/VDSL

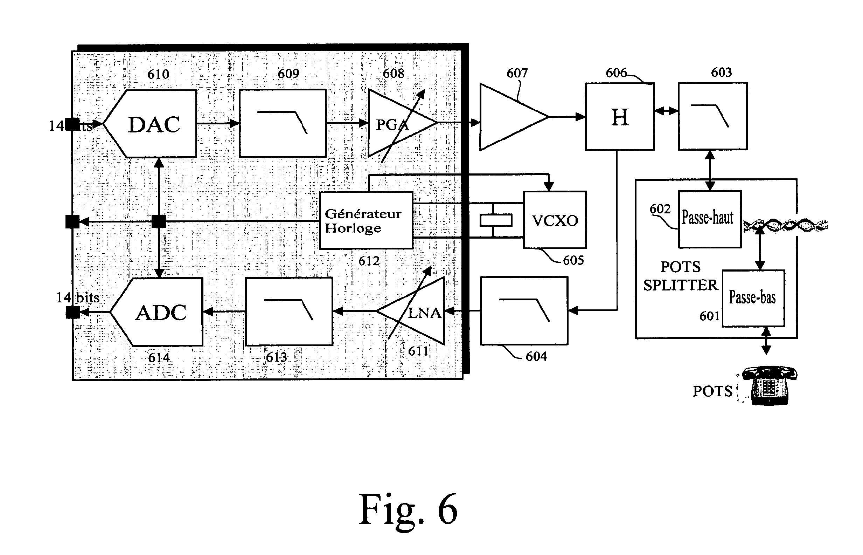

La figure 6 illustre plus particulièrement la structure de l'interface de ligne d'un modem bi-mode suivant l'invention. Celle-ci se compose d'un hybride 606 permettant le couplage de la ligne, à savoir la séparation de la voie montante *(upstream)* et descendante *(downstream)* respectivement reçue d'un amplificateur de ligne 607 (dit « *driver* » dans la terminologie anglo-saxonne) et transmise à un filtre passe-bas 604. L'hybride 606 est connecté par ailleurs à la paire torsadée via un second filtre passe-bas 603 et un ensemble de filtrage - composé respectivement d'un filtre passe-bas 601 et d'un filtre passe-haut 602 - qui est destiné à séparer les services de téléphonie analogique (appelés POTS en anglais) des services de type DSL. Cet ensemble de filtrage est plus connu sous l'appellation anglo-saxonne « POTS Splitter » ou « Service Splitter ». Les deux filtres passe-bas 604 et 603 coopèrent ensemble de manière à former un filtre passe-bas d'un ordre élevé et pourra, selon le cas, être remplacé par un unique filtre passe-bas d'un ordre plus élevé. D'une manière générale, la conception des filtres de séparation 601 et 602 est bien connue de l'homme du métier et leur réalisation ne sera pas développée plus avant.

Pour le chemin de réception, le filtre passe-bas 604 est connecté à un amplificateur faible bruit à gain programmable 611 (appelé aussi LNA pour Low *Noise Amplifier en anglais),* un filtre passe-bas 613 suivi d'un convertisseur analogique-numérique (ADC) 614 *(Analog to Digital Converter).* Les fréquences de coupure des filtres 603, 604 et 613 sont fixées à 12 MHz correspondant à la bande passante du VDSL.

Pour le chemin de transmission, on dispose d'un convertisseur numérique-analogique (DAC) 610, lequel génère à partir d'échantillons numériques - fixés à 14 bits dans le mode de réalisation préféré - un signal analogique qui est transmis à un filtre passe-bas 609 puis à un amplificateur à gain variable PGA 608 *(Programmable Gain Amplifier).* D'une manière générale, la réalisation des circuits amplificateurs à faible bruit et de circuits de filtrage ne fait pas l'objet de la présente invention et ne sera donc pas développée plus avant.

Le circuit d'interface de ligne est complété en outre par un circuit générateur d'horloge 612 et un oscillateur commandé en tension 605, bien connu de l'homme du métier.

L'amplificateur de ligne 607 sera en général un composant discret situé hors du circuit intégré du modem. Cela est principalement du à la tension plus importante exigée pour s'interfacer avec la ligne téléphonique. En revanche, il sera très souvent possible, comme on le verra ci-après, de n'employer qu'un seul amplificateur de ligne 607, lequel conviendra pour la majorité des situations de fonctionnement en mode VDSL ou ADSL. Alternativement on pourra disposer deux amplificateurs de lignes distincts, l'un pour le mode VDSL et l'autre pour le mode ADSL.

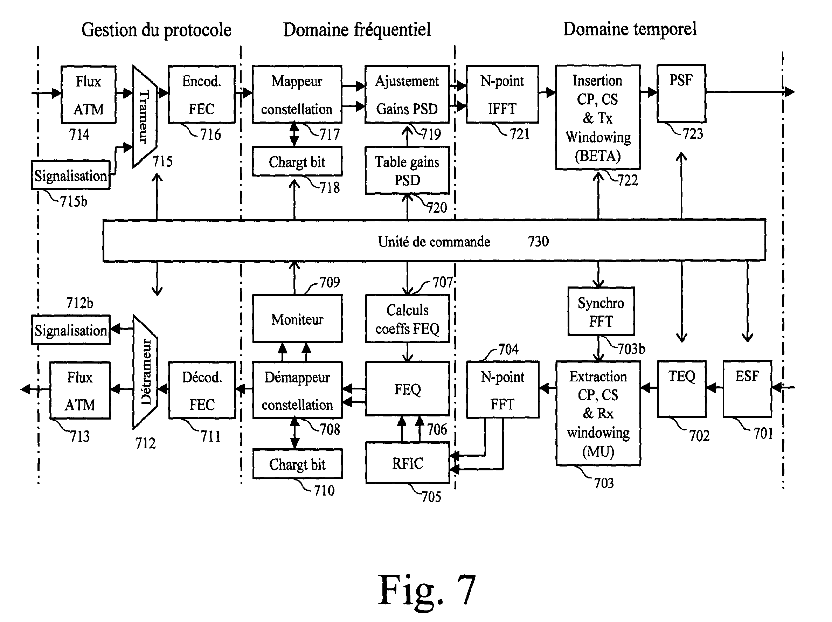

Dans un mode de réalisation préféré, un unique amplificateur de ligne 607 - calqué sur les spécifications du mode VDSL - est utilisé pour attaquer l'hybride 606. En effet, comme on le verra, on pourra réaliser tous les traitements requis pour le traitement convenable des signaux VDSL et ADSL au moyen de l'architecture de la figure 7.

En partant de l'interface de ligne, on constate que le circuit de réception comporte un élément optionnel de suppression d'écho ESF 701, semblable à l'élément 310 de la figure 3. En mode VDSL, les filtres PSF et ESF sont débrayés.

Comme cela est connu, l'hybride 606 ne saurait être parfait et l'on constate un retour de l'écho sur le signal reçu venant perturber ce dernier. En mode VDSL, cet écho est généralement supprimé au moyen d'un suffixe cyclique combiné avec un mécanisme d'avance temporelle (ou *timing advance* dans la littérature anglo-saxonne) bien connu de l'homme du métier, dont le mécanisme est illustré dans les figures 8 et 9a. Dans la figure 8, on voit que dans le modem LT situé dans le sous-répartiteur, le signal échantillonné par la fenêtre de FFT est composé du signal reçu côté LT-Rx noté $r_x(t)$ composé d'un symbole DMT Q, du bruit $b_r(t)$ et du signal d'écho $e_c(t)$ lui-même composé de deux morceaux de symboles DMT consécutifs P et P+1. L'échantillonnage de l'écho à cet endroit crée de l'interférence entre-symbole (IES) qui se traduit par une perte d'orthogonalité entre le signal reçu $r_x(t)$ et l'écho $e_c(t)$. Cette perte d'orthogonalité introduit une dégradation du rapport signal-sur-bruit (RSB) à l'endroit de la séparation entre les bandes « upstream » et « downstream ».

Dans la figure 9a, on voit que l'usage d'un suffixe cyclique CS ajouté au symbole DMT transmis et comportant la première partie de ce symbole suffit à supprimer IES puisqu'au moment de l'échantillonnage la fenêtre FFT, le signal est composé d'un symbole DMT reçu Q et d'un symbole DMT d'écho P.. En pratique, la longueur du suffixe cyclique (CS) est fixée à deux fois le temps (DELTA) que met le signal pour aller d'un bout à l'autre (CS = 2 x DELTA). Cependant, afin de réduire la longueur de CS, on peut appliquer comme illustré dans la figure 9b un mécanisme d'avance temporelle appelée « Timing Advance » en anglais, qui consiste à 1) mesurer le temps de transmission (DELTA) à travers le canal , 2) une fois la valeur de DELTA déterminée, appliquer une avance temporelle de DELTA sur le signal émis par le modem lointain (c'est-à-dire le modem NT-Tx). En pratique, ceci revient à décaler les bases de temps symboles des deux modems de DELTA échantillons.

Dans le mode VDSL, il n'est pas nécessaire d'utiliser les filtres PSF et ESF. En effet, dans le chemin de transmission, la mise en forme du spectre du signal par rapport aux masques de PSD est assurée par le fenêtrage temporel de paramètre BETA (« *Tx Pulse Shaping* » ou « *Tx Windowing* » en anglais). En outre, dans le chemin de réception, la séparation du signal reçu et de l'écho est assurée par l'application du suffixe cyclique et du mécanisme d'avance temporelle *(Timing Advance)* mentionné précédemment. (. Dans ce mode de fonctionnement, les filtres PSF et ESF sont donc désactivés ou débrayés.

En mode ADSL, comme on le sait, il n'y a ni fenêtrage temporel en transmission, ni suffixe cyclique, ni mécanisme d'avance temporelle. En effet, dans le mode ADSL, ces fonctions sont désactivées. Classiquement, on supprime alors l'écho au moyen d'un filtre de suppression analogique situé dans l'interface de ligne.

La présente invention permet de manière surprenante de s'affranchir du filtre analogique classique situé dans l'interface de ligne au moyen d'un premier filtre ESF 701 complété, dans la chaîne d'émission par un filtre PSF 723 que l'on décrira plus loin. Dans certaines conditions, le filtre PSF 723 que l'on décrira ci-après pourra se substituer même au filtre ESF 701.

Le filtre ESF 701 *(Echo Suppression Filter)* est un filtre numérique de suppression d'écho. D'une manière générale, on utilise, pour réaliser ce filtre, deux filtres à réponses impulsionnelles infinies *(Infinite Impulse Response IIR)*, respectivement un premier filtre passe haut *(High Pass Filter HPF)* d'ordre 3 et un second filtre passe bas *(Low Pass Filter LPF)* d'ordre 6 que l'on met en cascade.

Après traitement, le cas échéant, par le filtre ESF 701, les échantillons numériques sont ensuite transmis, à un égaliseur temporel TEQ 702 (*Time-domain EQualizer*) (la figure 7 met clairement en évidence une séparation entre le domaine fréquentiel et le domaine temporel). Comme précédemment, on pourra intercaler entre le filtre ESF 701 et l'égaliseur 702 un décimateur pour réaliser la conversion d'échantillonnage résultant des tailles distinctes de FFT dans le cas ADSL et VDSL. On le rappelle, en mode VDSL, le nombre de points de la FFT peut être fixé au maximum à 4096 points tandis que ce nombre est fixé à 256 dans le cas d'une liaison ADSL.

Le bloc égaliseur TEQ 702 est typiquement prévu dans le cas d'un modem ADSL. Comme on le sait, lorsque la longueur de la ligne est importante, on observe une réponse impulsionelle $h_{canal}(t)$ quasi infinie, ce qui ne permet pas d'endiguer l'IES résultante par le seul moyen du préfixe cyclique. Comme on l'a rappelé précédemment, on utilise alors et de façon complémentaire et combinée un égaliseur temporel TEQ dont le but est de raccourcir la réponse de $h_{canal}(t)$ de façon à la contenir dans le CP.

En revanche, un modem VDSL dans sa structure connue ne comporte pas de filtre TEQ 702. Cela résulte du fait que les lignes sont plus courtes et que par conséquent l'interférence entre-symbole (IES) peut être entièrement compensée par le préfixe cyclique CP. Dans le mode VDSL, le bloc TEQ est donc désactivé.

Après l'égalisation, le signal reçu est transmis à un bloc 703 permettant d'assurer la synchronisation des symboles DMT en réception. A cet effet, on effectue d'abord une synchronisation puis un fenêtrage de paramètre MU en réception appelé « *Rx Windowing »* qui fait une mise en forme du signal en réception. La synchronisation commandée par le bloc 703b, s'effectue par la capture d'une « fenêtre » de longueur 2N échantillons réels (N étant le nombre de porteuses), synchronisée et dans laquelle on aura préalablement supprimé CP et CS grâce au bloc 703. Les diagrammes LT-Rx des figures 8 et 9 montrent un tel processus de synchronisation. Les 2N échantillons de la fenêtre subissent alors une mise en forme temporelle par la fonction « Rx Windowing » comprise dans le bloc 703. Le paramètre MU définissant la profondeur du fenêtrage est programmable. Le signal résultant est ensuite transmis à la FFT. A ce stade, il faut noter que la FFT est une transfomée réel vers complexe ; ce qui signifie qu'à partir de 2N échantillons réels en entrée, elle génère après transformation N échantillons complexes.

Les valeurs de CP et CS sont ajustées en fonction, d'une part, du type de mode de fonctionnement VDSL ou ADSL (auquel cas CS = 0) et, d'autre part, la valeur de N fixée en fonction du mode de fonctionnement retenu, à savoir 256 dans le cas d'un flux descendant pour l'ADSL ou jusqu'à 4096 dans le cas d'une liaison de type VDSL. La valeur de CP est fixée à 40 dans le cas d'un mode ADSL.

Une unité de commande 730 - réalisée de préférence sous forme logicielle - permet de commander les différents paramètres de réglage et interrupteurs matériels et logiciels permettant à l'architecture de fonctionner dans les deux modes, et notamment :

- La valeur du paramètre N (déterminant la longueur de la fenêtre),
- La valeur des paramètres CP et CS,
- L'activation ou la désactivation des filtres PSF et ESF,
- L'activation ou la désactivation du filtre TEQ,
- L'activation ou la désactivation de la fonction mise en forme temporelle (« Tx Pulse Shaping » dans la littérature anglo-saxonne) et la valeur du paramètre de mise en forme BETA,
- L'activation ou la désactivation de la fonction fenêtrage temporel (« Rx Windowing » dans la littérature anglo-saxonne) et la valeur du paramètre de mise en forme MU.

La commande des réglages et interrupteurs rend possible la commutation dynamique d'un mode de fonctionnement du modem à un autre.

Le signal en sortie du bloc 703 fait ensuite l'objet d'une transformée de Fourier avec un nombre de points N, au moyen d'un bloc FFT 704, assurant la démodulation du signal DMT *(Discrete Multi-Tone)*. De préférence on réalise le bloc 703 au moyen d'un circuit électronique spécialisé permettant un traitement rapide mais on peut également réaliser la même fonction à partir d'un processeur de traitement de signal DSP *(Digital Signal Processor)* convenablement programmé.

Un bloc 705 - dit RFIC *(Radio Frequency Interference Cancellation)* récupère les éléments complexes de la transformée de Fourier et élimine dans le domaine fréquentiel les reliquats d'interférence à bande étroite - notamment celles provenant des radio-amateurs - susceptibles de parasiter le signal reçu, surtout lorsque l'on fonctionne dans un mode VDSL.

Les éléments sont ensuite transmis à un bloc 706 d'égalisation dans le domaine fréquentiel - dit FEQ *(Frequency-domain Equalizer)*, lequel vient compléter le cas échéant le traitement d'égalisation déjà effectué dans le domaine temporel par le bloc 702. Comme cela est connu de l'homme du métier, l'égalisation est réalisée en mesurant le taux de distorsion introduite par le canal sur chacune des porteuses considérées et en corrigeant cette distorsion. Cette égalisation est l'objet d'un traitement numérique et les coefficients sont fournis par le bloc Calcul des coefficients FEQ 707, commandé par une unité de commande 730.

Après égalisation dans le domaine fréquentiel, les signaux sont fournis à un démappeur de constellation 708, lequel prend les symboles complexes reçus sur chacune des porteuses. A partir de chaque point complexe, on récupère un point de la constellation en fonction du type de modulation (4QAM *Quadrature Amplitude Modulation* par exemple pour une constellation à quatre points) et également du taux de chargement de bits (ou *bit loading* dans la littérature anglo-saxonne) qui est fourni par le bloc 710.

Le flux de données binaires résultant de l'opération de demapping est ensuite fourni à un décodeur FEC 711 *(Forward Error Correction Decoder)* pour le décodage. Le mode ADSL permet un mode optionnel avec un codage en treillis qui ne sera pas présenté ici.

Les bits décodés sont ensuite transmis à un détrameur 712 *(Deframer* en anglais), lequel extrait d'une part la signalisation (bloc 712b) et d'autre part, les cellules ATM *(Asynchronous Transfer Mode)* qui peuvent alors être transmises à la couche supérieure de communication. Le détrameur 712 est directement lié au mode ADSL ou VDSL considéré et le bon traitement est par conséquent défini par voie logicielle uniquement.

D'une manière générale, la signalisation et l'ensemble des protocoles mis en oeuvre dans le traitement de cellules ATM sont bien connus de l'homme du métier et ne seront par conséquent pas développés.

D'une manière duale, dans le chemin de transmission, le flux de bits ATM entre dans le bloc 714 et est combiné au moyen d'un trameur 715 (Framer en anglais) aux informations de signalisation et de protocoles fournies par un bloc 715b. Le résultat est ensuite transmis à un encodeur FEC 716 *(Forward Error Corerction Encoder)* qui permet d'insérer la protection nécessaire sur les bits à transmettre.

Le flux de bits codés est ensuite transmis à un encodeur de constellation 717 (ou mappeur), lequel associe à chaque symbole M-aire (c'est-à-dire symbole de M bits) un point complexe dans une constellation à $2^M$ états. Le nombre de bits à encoder sur chaque porteuse est défini par le bloc 718, lequel correspond au bloc 710 contenu dans le chemin de réception du modem *distant* en sorte que l'extraction des bits puisse être convenablement réalisée après réception du point de constellation par l'autre modem. Comme cela est connu par l'homme du métier, la synchronisation des tables contenues dans les blocs 710 et 718 de deux modems opposés se fait durant une phase d'initialisation qu'il n'est pas utile de rappeler ici.

Les points complexes de la constellation sont ensuite transmis à un bloc d'ajustements des gains de PSD 719 *(Power Spectral Density)* permettant d'appliquer, sur chacune des porteuses un gain réel lequel est défini par une table de gains de PSD 720. Contrairement à l'approche connue, on prévoit à ce niveau un gain complexe de manière à introduire une pré-compensation $H^{-1}(f)$ de la fonction de transfert du PSF 723. On réalise ainsi une double fonction. D'une part, de conformer le signal émis au masque dit de PSD autorisé quand on fonctionne en mode ADSL et d'autre part, on effectue une pré-compensation des distorsions introduites par le filtre PSF 723. De cette manière on pourra compenser les variations non linéaires introduites par le filtre à réponse impulsionnelle infini PSF 723. Les blocs 719 et 720 réalisent par conséquent la fonction de pré-compensation du bloc 302 de la figure 3. Les coefficients de pré-compensation notés $H^{-1}_{PSF}(k)$ sont calculés a-priori pour le filtre PSF considéré. Ils sont ensuite incorporés à la table 720 qui devient complexe de la façon suivante : chaque nouveau coefficient de gains de $G'_{PSD}(k)$ est égal à la valeur du gain de PSD initial $G_{PSD}(k)$ multiplié par le coefficient de pré-compensation $H^{-1}_{PSF}(k)$ soit $G'_{PSD}(k) = G_{PSD}(k) \times H^{-1}_{PSF}(k)$.

Après traitement par le bloc PSD 719, on génère le signal temporel au moyen d'une transformée de Fourier inverse 721 prenant N points complexes en entrée et fournissant 2N échantillons réels en sortie, N étant défini en fonction du mode de fonctionnement souhaité. Dans un mode de type ADSL, comme pour le bloc 704, on choisira N égal à 256. Le bloc 721 génère par conséquent, dans le domaine temporel, le signal DMT. Comme précédemment, on intercale le cas échéant un interpolateur (non représenté) pour tenir compte du rapport de sur échantillonnage résultant du rapport des tailles de FFT distinctes pour le mode ADSL et VDSL.

Le signal temporel est ensuite transmis au bloc 722 qui introduit les préfixes et suffixes cycliques CP et CS en fonction du mode de fonctionnement envisagé, ainsi que la mise en forme du signal (« *Tx Pulse Shaping* » en anglais) avec un paramètre BETA qui est défini conformément au standard considéré.

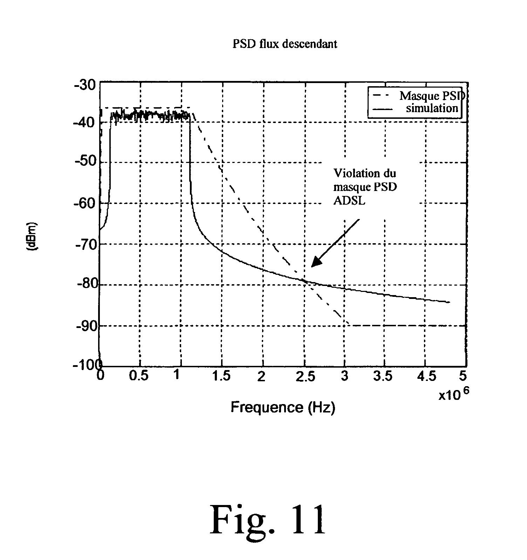

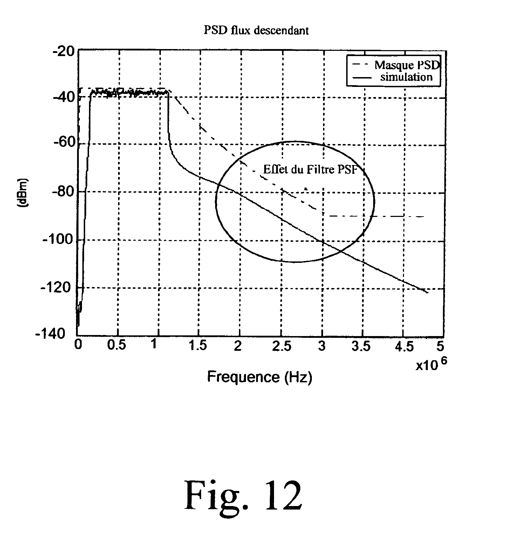

Le bloc PSF 723 *(PSD Shaping Filter)* sert ensuite à la mise en forme des signaux pour le respect des masques de PSD. D'une manière générale, on utilise, pour réaliser ce filtre deux filtres elliptiques à réponses impulsionnelles infinies *(Infinite Impulse Response IIR)*, respectivement un premier filtre passe haut *(High Pass Filter HPF)* d'ordre 3 et un second filtre passe bas *(Low Pass Filter LPF)* d'ordre 6. Les figures 11 et 12 illustrent l'effet du filtre PSF 723 sur le signal à l'émission par rapport à un masque de PSD de l'ADSL. On a constaté que lorsque le filtre PSF 723 est suffisamment raide - ce que permettent les filtres à réponse impulsionnelle envisagé - on peut même alors se passer du filtre ESF 701.

Le schéma de la figure 7 se complète également par un circuit moniteur 709 qui effectue un certain nombre de traitement sur le signal reçu, et notamment des calculs de variance du bruit et de distorsion sur chacune des porteuses, etc.... De tels calculs sont bien connus d'un homme du métier et ne seront pas exposés ici plus en détail.

Comme on le voit ci-dessus, l'architecture qui vient d'être décrite permet de fonctionner aussi bien en mode ADSL qu'en mode VDSL. En particulier, il pourra être avantageux de n'employer qu'un seul circuit d'interface de ligne. Il en résulte une interopérabilité descendante d'un modem VDSL avec un modem ADSL, laquelle tranche nettement avec la doctrine classique qui consiste à opposer les deux types de techniques.

Au contraire, non seulement les deux techniques ne sont pas opposées mais, en outre, elles apparaissent à présent complémentaires puisqu'il sera possible de passer dynamiquement d'un fonctionnement ADSL vers un fonctionnement VDSL.

L'architecture qui vient d'être décrite permet de se conformer aussi bien aux contraintes imposées par le VDSL que par l'ADSL. Plus particulièrement, elle permet de réaliser une configuration automatique du modem dans un mode de fonctionnement, soit ADSL, soit VDSL.

## 2. Configurations du modem ADSL/VDSL

Comme on vient de le voir, l'architecture présentée précédemment permet d'assurer la fonction d'interopérabilité ADSL/VDSL et ce de manière entièrement automatique.

Plus généralement, l'architecture qui vient d'être décrite permet de commander, d'une manière dynamique, la commutation entre un mode symétrique et asymétrique en fonction d'un critère prédéterminé.

On décrira à titre d'exemple illustratif deux critères particuliers, étant entendu que l'homme du métier adaptera la structure à tout autre critère quelconque.

Détermination du mode de fonctionnement par la procédure G.HS

Dans un premier critère, le modem utilise le protocole universel G.HS spécifié dans la recommandation G.994.1 de l'Union Internationale de Télécommunications (UIT) qui permet, via l'échange de signaux et de messages, à deux modems xDSL quelconques de s'activer mutuellement et de déterminer dans quel mode ils vont dialoguer. Le résultat du G.HS est l'identification du mode de fonctionnement : ADSL ou VDSL.

Dès la mise sous tension, un modem bi-mode conformément à la présente invention se trouve dans un état dit « de veille » où il attend d'être activé dans le mode ADSL ou le mode VDSL.

Dans cet état, il cherche à détecter les signaux d'activation en s'appuyant, dans ce premier mode de réalisation, sur les jeux des signaux A43, B43, C43 et D43 (jeu de signaux destiné au VDSL mais non encore figé) du protocole G.HS.

Le protocole universel G.HS spécifié dans la recommandation G.994.1 de l'Union Internationale de Télécommunications (UIT) permet, via l'échange de signaux et de messages, à deux modems xDSL de s'activer mutuellement et de déterminer dans quel mode ils vont dialoguer. Dans l'approche connue, la procédure G.994.1 est utilisée pour permettre à un modem de s'assurer que le modem à l'autre bout est bien conforme à son propre standard. En cas de non conformité, la communication s'arrête. Le modem bi-mode conformément à la présente invention s'appuie sur le protocole existant pour déterminer le mode de fonctionnement à utiliser et lancer la séquence de démarrage appropriée.

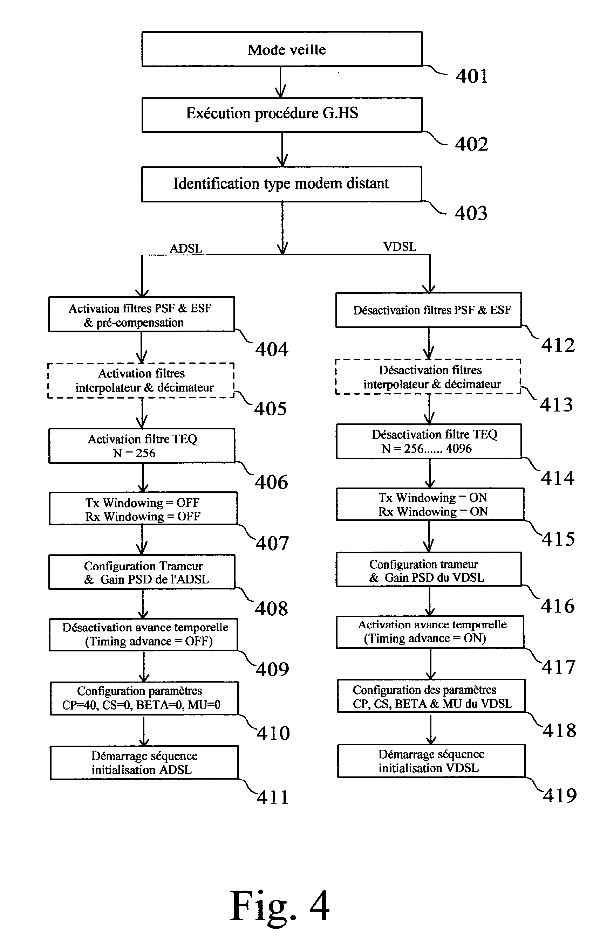

Le résultat du G.HS est l'identification du mode de fonctionnement : ADSL ou VDSL, et sert de critère de configuration automatique que l'on décrira à présent en référence avec la figure 4.

Dans une étape 401, le modem A/V est placé dans un état de veille.

Dans une étape 402, le procédé exécute la procédure G.994.1 (G.HS) et attend en réponse les signaux d'identification du modem distant.

Dans une étape 403, le procédé identifie le type du modem distant qui est connecté à l'autre bout de la ligne.

Si le modem est reconnu comme étant de type ADSL, alors le procédé se poursuit avec une étape 404 où il entre dans une auto-configuration de son architecture en un modem de type ADSL, en exécutant la séquence d'étapes 404-411 de configuration des paramètres.

Dans une étape 404, le procédé active les filtres PSF 723 et ESF 701.

Dans une étape 405, le décimateur (resp. interpolateur) est, le cas échéant configuré pour réaliser le rapport d'échantillonnage convenable entre la sortie du convertisseur ADC (resp. entrée du convertisseur DAC) et l'entrée de la FFT (resp. sortie de la IFFT).

Dans une étape 406, on active l'égaliseur temporel TEQ 702 et l'égaliseur fréquentiel 706 et le nombre de porteuses (dans la bande DS) est fixé à 256. Il y a par conséquent, extinction des autres porteuses utilisées dans le mode VDSL.

Les paramètres de fenêtrage en transmission (Tx Windowing) et en réception (Rx windowing) sont désactivés dans une étape 407. Dans une étape 408, le trameur 715 et le bloc de gain 719 sont configurés sur un mode ADSL.

L'avance temporelle est désactivée dans une étape 409.

Dans une étape 410, on fixe les paramètres cycliques CP et CS à 40 et à 0 respectivement. Les paramètres BETA et MU sont fixés à 0.

Le modem poursuit ensuite par une étape 411 au cours de laquelle il lance la séquence d'initialisation ADSL, bien connue de l'homme du métier.

Dans cet état, l'architecture du modem se trouve configurée pour réaliser la séparation des différents canaux au moyen des filtres numériques PSF et ESF respectivement contrairement aux modems ADSL connus qui emploient habituellement des filtres analogiques dans l'interface de ligne

Au contraire, si la détection des signaux du protocole G.HS montre que le modem distant est de type VDSL, alors le modem bi-mode se configure dans un mode VDSL également.

A cet effet, le procédé poursuit avec une étape 412 dans laquelle les filtres PSF 723 et ESF 701 sont désactivés..

Dans une étape 413, le décimateur (resp.l'interpolateur) est également configuré de façon à respecter le rapport des fréquences d'échantillonnage entre la sortie du convertisseur ADC (resp. convertisseur DAC) et l'entrée de la FFT (resp. sortie de la IFFT)..

Le procédé se poursuit ensuite par une étape 414 au cours de laquelle l'égaliseur temporel TEQ est également désactivé et le nombre de porteuses est fixé à un nombre compatible avec le mode VDSL, par exemple 4096 porteuses.

Dans une étape 415, le procédé active le fenêtrage en transmission (*Tx Windowing)* et en réception *(Rx windowing)* avec respectivement les paramètres BETA et MU par défaut.

Puis, dans une étape 416, le trameur 712 et le bloc de gain 719 sont configurés sur un mode VDSL.

L'avance temporelle (« *Timing Advance* ») est activée dans une étape 417 avec une valeur par défaut.

Dans une étape 418, les paramètres cycliques CP, CS, BETA et MU sont respectivement fixés à des valeurs correspondant au mode VDSL.

Le modem poursuit enfin par une étape 419,qui est la séquence d'initialisation VDSL permettant ensuite au modem de fonctionner dans ce mode.

Détermination du mode de fonctionnement par la mesure de la longueur de la ligne

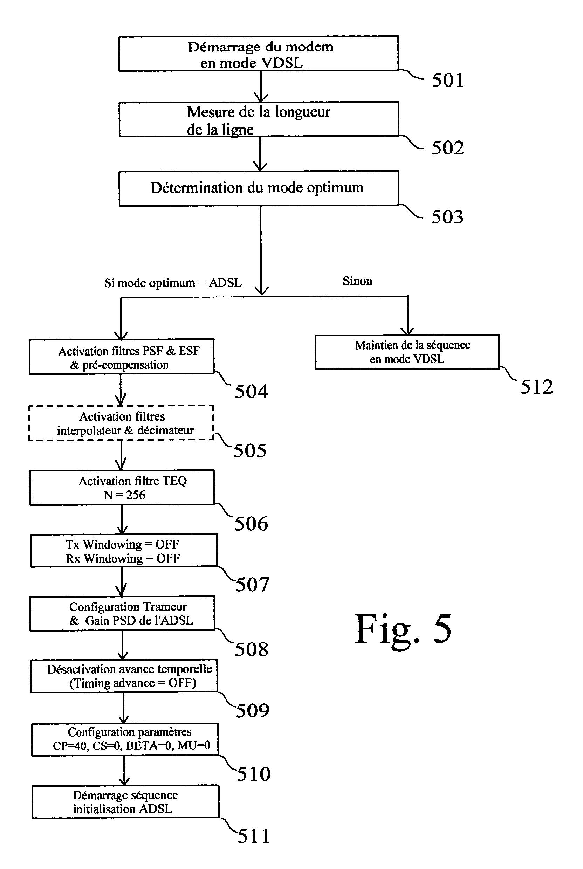

On décrit à présent un second critère de commutation du mode de fonctionnement - ADSL ou VDSL - du modem A/V. La figure 5 illustre à présent un second mode de réalisation permettant d'adapter le mode de fonctionnement adéquat en fonction d'un critère qui est la longueur de la ligne.

Le procédé démarre par une étape 501 qui est, par exemple, le démarrage du modem en mode VDSL, généralement postérieure à la mise sous tension de celui-ci. La configuration en mode VDSL résulte de l'exécution de la séquence d'initialisation complète du modem VDSL ou d'une séquence raccourcie non décrite ici.

Dans une étape 502, le procédé effectue une mesure de la longueur de la ligne. De préférence, la détermination de la longueur de la ligne est réalisée au moyen du calcul du temps requis par le signal pour effectuer un aller-retour entre les deux modems. Dans un mode de réalisation préféré, on utilise la méthode connue dans le VDSL pour mesurer le paramètre de l'avance temporelle (ou *« Timing Advance* » dans la littérature anglo-saxonne), lequel est utilisé pour insérer un décalage des bases de temps des deux modems afin de réduire le suffixe cyclique à une valeur de Delta seulement (et non pas 2xDelta ). Clairement, il s'agira d'un mode de réalisation spécifique et l'homme du métier pourra lui substituer tout autre méthode ou procédé connu pour mesurer la longueur de la ligne.

Dans un mode de réalisation préféré, la mesure de la longueur de la ligne permet de prendre une décision quant au mode optimum de fonctionnement du modem.

Dans une étape 503, le procédé met en oeuvre un mécanisme de décision basé sur la détermination précédente, pour fixer le mode de fonctionnement adéquat.

Dans le cas d'une ligne longue, l'étape 503 va conduire à la fixation d'un mode de fonctionnement de type ADSL, avec extinction d'un certain nombre de porteuses.

Le procédé entre alors dans l'exécution d'une séquence d'étapes 504-511 - similaires aux étapes 404-411 - aboutissant à la séquence d'initialisation du modem dans un mode ADSL.

Au contraire, si la ligne est considérée comme compatible avec un mode de fonctionnement VDSL, alors le modem reste dans le mode VDSL de départ. Le cas échéant, il peut exécuter à nouveau la séquence d'initialisation complète du VDSL, de façon à optimiser les paramètres de la communication.

Les deux modes de réalisation qui viennent d'être exposés illustrent parfaitement la grande flexibilité permise par l'architecture des figures 3 et 7. L'invention permet de démarrer dans un mode par défaut, VDSL ou ADSL, et de commuter dans un autre mode en fonction d'un critère prédéterminé. Il convient d'observer que tout critère pourra être pris en considération pour provoquer, d'une manière entièrement automatique, la commutation entre un mode symétrique ou asymétrique. A cet effet, un exemple de commutation du mode en fonction de la longueur de la ligne a été présenté précédemment. Dans un mode de réalisation supplémentaire, on pourra utiliser comme critère le rapport signal sur bruit mesuré sur chacune des porteuses.

On permet ainsi la fusion de deux technologies qui sont traditionnellement perçues comme distinctes, et opposées : le VDSL pour des applications haut-débits plutôt destinées aux professionnels ou à une clientèle privilégiée, et l'ADSL pour des applications grand public. Avec le circuit de l'invention, on réalise, au moyen d'une seule architecture de modem la dualité assurant la meilleure flexibilité.

Le fabricant d'un modem pourra ainsi proposer à ses consommateurs d'opter pour les modems de nouvelles technologies VDSL tout en assurant leur fonctionnement dans les zones ou seul l'accès ADSL est déployé.

Les consommateurs, inversement, trouveront un intérêt direct dans l'acquisition d'un matériel qui leur assurera un fonctionnement immédiat sur le réseau ADSL tout en permettant un accès ultérieur au nouveau standard.

On constate ainsi que grâce à cet aménagement, le modem de type VDSL peut fonctionner dans un mode ADSL tout en conservant la même interface de ligne.

Il en résulte un avantage considérable au niveau de la facilité d'intégration et du coût de fabrication.

## Revendications

1. Procédé de configuration d'un modem de type xDSL symétrique, comportant les étapes suivantes :

   - détection d'un critère prédéterminé correspondant à un mode de fonctionnement asymétrique de type notamment ADSL, ledit critère comportant une estimation de la longueur de la ligne ;
   - en réponse à la dite détection, éteindre un nombre de porteuses de manière à établir un mode de fonctionnement asymétrique.

2. Procédé de configuration selon la revendication 1 **caractérisé en ce qu'**il est appliqué à un modem de type VDSL fonctionnant avec un nombre de porteuses jusqu'à 4096 et pouvant être reconfiguré dans un mode ADSL avec un nombre de porteuses réduit à 256 porteuses.

3. Procédé de configuration selon la revendication 1 **caractérisé en ce que** ledit critère est la détection de signaux définis à la recommandation G.994.1 et/ou la mesure du rapport signal sur bruit par porteuse.

4. Procédé de configuration selon la revendication 1 **caractérisé en ce que** ledit critère prédéterminé est la mesure de la longueur de la ligne évaluée à partir de la mesure de l'avance temporelle.

5. Procédé selon la revendication 1 **caractérisé en ce qu'**il comporte un moyen de désactivation du suffixe cyclique CS dans le chemin de transmission ainsi qu'un filtrage numérique de mise en forme spectrale pour la conformité à un masque de type ADSL, associé à un filtrage numérique de suppression d'écho et d'égalisation temporelle (TEQ) dans le chemin de réception.

6. Procédé de configuration selon la revendication 2 **caractérisé en ce que**, dans le mode ADSL, il comporte les étapes suivantes :

   dans le chemin de transmission :

   - activation d'un filtrage numérique (305) de mise en forme spectrale (PSF) pour la conformité à un masque de type ADSL,
   - désactivation d'un procédé d'insertion d'un suffixe cyclique CS à la suite de chaque symbole à transmettre,
   - activation d'une pré-compensation par $H^{-1}$ (f) (302) avant une transformée de fourrier inverse (IFFT) permettant de compenser la distorsion de phase et d'amplitude introduite par ledit filtrage numérique de mise en forme spectrale PSF (305), et

   dans le chemin de réception, activation d'un filtrage numérique de suppression d'écho (ESF ) et d'égalisation temporelle TEQ.

7. Modem de type xDSL permettant un fonctionnement symétrique en mode DMT basé sur un nombre de porteuses ; comportant

   - des moyens de détection d'un critère prédéterminé pour fonctionner à un mode asymétrique, notamment de type ADSL, ledit critère comportant une estimation de la longueur de la ligne ;
   - des moyens pour commander l'extinction d'un nombre de porteuses de manière à établir un mode de fonctionnement asymétrique.

8. Modem selon la revendication 7 **caractérisé en ce qu'**il comporte des moyens de communication suivant un mode VDSL et des moyens d'auto configuration dans un mode ADSL en réponse à la détection dudit critère prédéterminé.

9. Modem selon la revendication 7 **caractérisé en ce que** ledit critère est la détection de signaux définis à la recommandation G.994.1 et/ou la mesure du rapport signal sur bruit par porteuse.

10. Modem selon la revendication 7 **caractérisé en ce que** ledit critère prédéterminé est la mesure de la longueur de la ligne évaluée à partir d'une mesure de l'avance temporelle.

11. Modem selon la revendication 7 **caractérisé en ce que**, dans le mode ADSL, il comporte:

    dans le chemin de transmission:

    - un filtre numérique de mise en forme spectrale (PSF), débrayable, pour la conformité à un masque de type ADSL,
    - des moyens permettant de pré-compenser la distorsion de phase et d'amplitude introduite par ledit filtre numérique PSF de mise en forme spectrale,
    - des moyens pour désactiver l'insertion d'un suffixe cyclique à la suite de chaque symbole à transmettre,

dans le chemin de réception :

- un filtre numérique de suppression d'écho (ESF) combiné à un filtre numérique d'égalisation dans le domaine temporel TEQ.

**12.** Modem selon la revendication 11 **caractérisé en ce que** lesdits filtres de mise en forme spectrale (PSF) et de suppression d'écho (ESF) sont des filtres passe-bande à réponses impulsionnelles infinies.

**13.** Modem selon la revendication 11 **caractérisé en ce que** lesdits filtres de mise en forme spectrale (PSF) et de suppression d'écho (ESF) sont identiques.

**14.** Modem selon la revendication 11 **caractérisé en ce qu'**il comporte dans le chemin de transmission un élément de gain complexe avant la modulation de manière à effectuer une pré-compensation de la distorsion introduite par lesdits filtres de mise en forme spectrale et de suppression d'écho.

**15.** Modem selon la revendication 7 **caractérisé en ce que** la commutation du mode ADSL en VDSL est effectuée sur réponse à une commande de l'utilisateur.

# Fig.1

Débit [Mbits/sec]

60

8

2

VDSL

ADSL

ADSL2+

ADSL2

1 km    2 km    3 km    4 km    5 km

Longueur de ligne

EP 1 473 896 A1

100                    Descendant (DS)           200

LT
(XTU-O)                                          NT
                                               (XTU-R)

                       montant (US)

# Fig. 2

301 Mappeur QAM
302 Précomp H-1 (f)
303 IFFT
304 Interpol. par k
305 Filtre PSF
306 DAC
307 Chemin analog. Tx
315 H
paire torsadée
308 Chemin analog. Rx
309 ADC
310 Filtre ESF
311 Decim par k
312 TEQ
313 FFT
314 Démappeur QAM

Fig. 3

Mode veille — 401

Exécution procédure G.HS — 402

Identification type modem distant — 403

ADSL | VDSL

Activation filtres PSF & ESF
& pré-compensation — 404

Désactivation filtres PSF & ESF — 412

Activation filtres
interpolateur & décimateur — 405

Désactivation filtres
interpolateur & décimateur — 413

Activation filtre TEQ
N − 256 — 406

Désactivation filtre TEQ
N = 256...... 4096 — 414

Tx Windowing = OFF
Rx Windowing = OFF — 407

Tx Windowing = ON
Rx Windowing = ON — 415

Configuration Trameur
& Gain PSD de l'ADSL — 408

Configuration trameur
& Gain PSD du VDSL — 416

Désactivation avance temporelle
(Timing advance = OFF) — 409

Activation avance temporelle
(Timing advance = ON) — 417

Configuration paramètres
CP=40, CS=0, BETA=0, MU=0 — 410

Configuration des paramètres
CP, CS, BETA & MU du VDSL — 418

Démarrage séquence
initialisation ADSL — 411

Démarrage séquence
initialisation VDSL — 419

# Fig. 4

```
┌─────────────────────────┐
│   Démarrage du modem    │
│     en mode VDSL        │ ╌╌ 501
└─────────────────────────┘
             │
             ▼
┌─────────────────────────┐
│   Mesure de la longueur │
│      de la ligne        │ ╌╌ 502
└─────────────────────────┘
             │
             ▼
┌─────────────────────────┐
│ Détermination du mode optimum │ ╌╌ 503
└─────────────────────────┘
             │
```

Si mode optimum = ADSL                    Sinon

```
┌─────────────────────────┐      ┌─────────────────────────┐
│ Activation filtres PSF & ESF │  │   Maintien de la séquence │
│    & pré-compensation   │      │      en mode VDSL       │ ╌╌ 512
└─────────────────────────┘      └─────────────────────────┘
          ╌╌ 504
             │
             ▼
┌─ ─ ─ ─ ─ ─ ─ ─ ─ ─ ─ ─ ┐
│    Activation filtres    │
│  interpolateur & décimateur │ ╌╌ 505
└─ ─ ─ ─ ─ ─ ─ ─ ─ ─ ─ ─ ┘
             │
             ▼
┌─────────────────────────┐
│    Activation filtre TEQ │
│        N = 256          │ ╌╌ 506
└─────────────────────────┘
             │
             ▼
┌─────────────────────────┐
│   Tx Windowing = OFF    │
│   Rx Windowing = OFF    │ ╌╌ 507
└─────────────────────────┘
             │
             ▼
┌─────────────────────────┐
│   Configuration Trameur │
│   & Gain PSD de l'ADSL  │ ╌╌ 508
└─────────────────────────┘
             │
             ▼
┌─────────────────────────┐
│ Désactivation avance temporelle │
│   (Timing advance = OFF) │ ╌╌ 509
└─────────────────────────┘
             │
             ▼
┌─────────────────────────┐
│  Configuration paramètres │
│ CP=40, CS=0, BETA=0, MU=0 │ ╌╌ 510
└─────────────────────────┘
             │
             ▼
┌─────────────────────────┐
│    Démarrage séquence    │
│    initialisation ADSL   │ ╌╌ 511
└─────────────────────────┘
```

# Fig. 5

Fig. 6

Gestion du protocole          Domaine fréquentiel          Domaine temporel

| | | |
|---|---|---|

Flux ATM 714 → Trameur 715 → Encod. FEC 716 → Mappeur constellation 717 → Ajustement Gains PSD 719 → N-point IFFT 721 → Insertion CP, CS & Tx Windowing (BETA) 722 → PSF 723

Signalisation 715b

Chargt bit 718

Table gains PSD 720

Unité de commande          730

Moniteur 709

Calculs coeffs FEQ 707

Synchro FFT 703b

Signalisation 712b

Flux ATM 713 ← Détrameur 712 ← Décod. FEC 711 ← Démappeur constellation 708 ← FEQ 706 ← N-point FFT 704 ← Extraction CP, CS & Rx windowing (MU) 703 ← TEQ 702 ← ESF 701

Chargt bit 710

RFIC 705

# Fig. 7

Echo entrant dans la
fenêtre FFT du LT-Rx

LT-Tx   CP   Symbole DMT P   CP   Symbole DMT P+1

Δ

NT-Rx   CP   Symbole DMT P   CP   Symbole DMT P+1

NT-Tx   CP   Symbole DMT Q

Δ

LT-Rx   CP   Symbole DMT Q

t=0

**Fenêtre FFT**

ec(t)
Echo

rx(t) + br(t)
Signal reçu + bruit

rx(t) + br(t) + ec(t)
Signal passant dans la
FFT en réception

Δ : retard de la ligne

# Fig. 8

Echo entrant dans la
fenêtre FFT du LT-Rx

**LT-Tx** — CP | Symbole DMT P | CS

$ec(t)$
**Echo**

**NT-Rx** — Δ — CP | Symbole DMT P

**NT-Tx** — CP | Symbole DMT Q

**LT-Rx** — Δ — CP | Symbole DMT Q

$rx(t) + br(t)$
**Signal reçu + bruit**

2Δ — **Fenêtre FFT**

$rx(t) + br(t) + ec(t)$
**Signal passant dans la
FFT en réception**

t=0

Δ : retard de la ligne

## Fig. 9a

Echo entrant dans la
fenêtre FFT du LT-Rx

**LT-Tx** | CP | Symbole DMT P | CS |

ec(t)
Echo

Δ

**NT-Rx** | CP | Symbole DMT P |

TA

**NT-Tx** | CP | Symbole DMT Q |

Δ

**LT-Rx** | CP | Symbole DMT Q |

rx(t) + br(t)
Signal reçu + bruit

rx(t) + br(t) + ec(t)
Signal passant dans la
FFT en réception

t=0 **Fenêtre FFT**

Δ : retard de la ligne

TA : Timing Advance

# Fig. 9b

Fig. 10

Fig. 11

Fig. 12

**Office européen
des brevets**

# RAPPORT DE RECHERCHE EUROPEENNE

Numéro de la demande

EP 04 39 2011

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WIESE B R ET AL: "PROGRAMMABLE IMPLEMENTATIONS OF XDSL TRANSCEIVER SYSTEMS" IEEE COMMUNICATIONS MAGAZINE, IEEE SERVICE CENTER. PISCATAWAY, N.J, US, vol. 38, no. 5, mai 2000 (2000-05), pages 114-119, XP000949791 ISSN: 0163-6804 * le document en entier * ----- | 1-15 | H04L27/26 H04L25/03 H04L5/14 |
| X | WO 99/50967 A (MATSUSHITA GRAPHIC COMMUNIC ;PALM STEPHEN (JP)) 7 octobre 1999 (1999-10-07) * abrégé * * page 1, ligne 26 - page 2, ligne 23 * * page 9, ligne 7-22 * * page 12, ligne 22 - ligne 26 * | 1,7 | |
| A | ----- | 2-6,8-15 | |

DOMAINES TECHNIQUES RECHERCHES (Int.Cl.7)

H04L

Le présent rapport a été établi pour toutes les revendications

| Lieu de la recherche | Date d'achèvement de la recherche | Examinateur |
|---|---|---|
| Munich | 21 juillet 2004 | Martínez Martínez, V |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

                                                
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**                EP 04 39 2011

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-07-2004

| Document brevet cité au rapport de recherche | | Date de publication | Membre(s) de la famille de brevet(s) | | Date de publication |
|---|---|---|---|---|---|
| WO 9950967 | A | 07-10-1999 | AU | 3218199 A | 18-10-1999 |
| | | | CA | 2288283 A1 | 07-10-1999 |
| | | | CA | 2396963 A1 | 07-10-1999 |
| | | | CA | 2398865 A1 | 07-10-1999 |
| | | | CA | 2407503 A1 | 07-10-1999 |
| | | | CA | 2417991 A1 | 07-10-1999 |
| | | | CA | 2445332 A1 | 07-10-1999 |
| | | | CA | 2445334 A1 | 07-10-1999 |
| | | | CN | 1266558 T | 13-09-2000 |
| | | | EP | 1341337 A2 | 03-09-2003 |
| | | | EP | 1341338 A2 | 03-09-2003 |
| | | | EP | 1341339 A2 | 03-09-2003 |
| | | | EP | 1341340 A2 | 03-09-2003 |
| | | | EP | 1398898 A1 | 17-03-2004 |
| | | | EP | 1414180 A2 | 28-04-2004 |
| | | | EP | 0990311 A1 | 05-04-2000 |
| | | | JP | 3441081 B2 | 25-08-2003 |
| | | | JP | 2002500855 T | 08-01-2002 |
| | | | JP | 2002247138 A | 30-08-2002 |
| | | | JP | 2004048681 A | 12-02-2004 |
| | | | JP | 3488234 B1 | 19-01-2004 |
| | | | JP | 2004048785 A | 12-02-2004 |
| | | | JP | 3502092 B1 | 02-03-2004 |
| | | | JP | 2004112821 A | 08-04-2004 |
| | | | TW | 439369 B | 07-06-2001 |
| | | | WO | 9950967 A1 | 07-10-1999 |
| | | | US | 2003193929 A1 | 16-10-2003 |
| | | | US | 2003103559 A1 | 05-06-2003 |
| | | | US | 2003165188 A1 | 04-09-2003 |
| | | | US | 2003206580 A1 | 06-11-2003 |
| | | | US | 2004057510 A1 | 25-03-2004 |
| | | | US | 2004052308 A1 | 18-03-2004 |

EPO FORM P0460

Pour tout renseignement concernant cette annexe : voir Journal Officiel de l'Office européen des brevets, No.12/82